# EUROPEAN PATENT SPECIFICATION

(11) **EP 4 067 005 B1**
(45) Date of publication and mention of the grant of the patent: **23.10.2024**
(21) Application number: 22164069.1
(22) Date of filing: 24.03.2022
(51) Int. Cl.: B25F 5/00, H02J 7/00

(54) **DISCRETE BATTERY PACK DISCONNECT CIRCUIT**
TRENNSCHALTUNG FÜR DISKRETE BATTERIEPACKS
CIRCUIT SÉPARÉ DE DÉCONNEXION DU BLOC-BATTERIE

(30) Priority: 31.03.2021 US 202163168598 P
(43) Date of publication of application: 05.10.2022
(60) Divisional application: 24200292.1
(73) Proprietor: Black & Decker, Inc., New Britain, CT 06053 (US)
(72) Inventor: SIRAGUSA, Matthew A., Towson, 21286 (US)
(74) Representative: SBD IPAdmin

(56) References cited:
- DE-A1- 102015 009 463
- US-B2- 8 933 653

## Description

### RELATED APPLICATION

This patent application claims the benefit of US Provisional Application No. 63/168,598 filed March 21, 2021.

### FIELD OF THE DISCLOSURE

This disclosure relates to power tools, particularly, a discrete battery disconnect circuit for current protection of cordless power tools.

### BACKGROUND

As demand for greater output power from a power tool increases, the total current requirements increase to meet such demand. Conventional mechanical switches with metallic power contacts and conventional fuses having commonplace fusing elements have limitations that make them either unable to meet the current demand or too large for usage in cordless power tools. Such mechanical switches and fuses are also highly inefficient and produce significant heat. DE102015009463A1 discloses a motor driven appliance comprising a battery, a motor, at least one switch, a control unit and an abnormality detection unit which detects abnormality of the appliance to switch off switching elements of a driver circuit. US 8 933 653 B2 discloses a power tool comprising:a housing; a brushless direct-current (BLDC) electric motor disposed inside the housing;a battery pack;a battery receptacle configured to receive the battery pack, the battery pack including a plurality of battery cells; a protection against an overcurrent being associated with a first current profile; a plurality of power switches disposed between the battery receptacle and the electric motor, the plurality of power switches including a plurality of high-side switches and a plurality of low-side switches, the plurality of power switches being associated with a second current profile; a control unit configured to control a switching operation of the plurality of power switches to operate the electric motor; and wherein a battery disconnect circuit disposed between the battery receptacle and the plurality of power switches to disconnect the supply of power from the battery pack if the current draw from the battery pack exceeds a current threshold.

### BRIEF DESCRIPTION OF THE DRAWINGS

In the accompanying drawings which form part of the specification:
Fig. 1 depicts a circuit diagram for a DC power tool having a brushless DC motor including a battery disconnect circuit, according to an embodiment;
Fig. 2 depicts a circuit diagram of the battery disconnect circuit, according to an embodiment;
Figs. 3 depicts a circuit diagram of the battery disconnect circuit, according to an alternative embodiment; and
Figs. 4-6 depict graphs including plots of current-time profiles associated with the battery disconnect circuit in comparison to plots of current-time profiles associated with the battery pack and the power tool, according to an embodiment.

Corresponding reference numerals indicate corresponding parts throughout the several figures of the drawings.

### SUMMARY

In an embodiment, a power tool is provided comprising: a housing; a brushless direct-current (BLDC) electric motor disposed inside the housing; a battery pack; a battery receptacle configured to receive a battery pack, the battery pack including a plurality of battery cells and a fuse being associated with a first current profile; a plurality of power switches disposed between the battery receptacle and the electric motor, the plurality of power switches including a plurality of high-side switches and a plurality of low-side switches, the plurality of power switches being associated with a second current profile; a control unit configured to control a switching operation of the plurality of power switches to operate the electric motor; and a battery disconnect circuit disposed between the battery receptacle and the plurality of power switches to disconnect the supply of power from the battery pack if, when the battery pack is received in the battery receptacle, the current draw from the battery pack exceeds a current threshold for a given duration of time, wherein the current threshold is smaller than a first current level associated the first current profile for the given duration of time but larger than a second current level associated with the second current profile for the given duration of time.

In an embodiment, the battery disconnect circuit includes a main solid-state switch disposed on a current path from the battery receptacle to the plurality of power switches, and a shunt resistor disposed in series with the main solid-state switch.

In an embodiment, the battery disconnect circuit further includes a switch controller separate from the control unit that is configured to monitor a current across the shunt resistor and drive the main solid-state switch accordingly.

In an embodiment, the switch controller is configured to deactivate the switch controller if the current across the shunt resistor exceeds the current threshold for the given duration of time.

In an embodiment, the switch controller is configured to store a value associated with the current across the shunt resistor in a non-volatile memory unit and continue to deactivate the power switch even if the battery pack is decoupled and recoupled to the battery receptacle.

In an embodiment, the battery disconnect circuit further includes a comparator configured to compare a voltage drop across the shunt resistor to a reference voltage value, and a latch configured to drive the main solid-state switch according to an output of the comparator.

In an embodiment, the current threshold is determined based on a current-time profile that at no point of time exceeds the first current profile or falls below the second current profile.

In an embodiment, the current-time profile includes a linear portion. Alternatively, and/or additionally, the current-time profile includes a stepped-profile or a flat portion.

In an embodiment, a power tool is provided comprising: a housing; a brushless direct-current (BLDC) electric motor disposed inside the housing; a battery receptacle configured to receive a battery pack, the battery pack including a plurality of battery cells and a fuse being associated with a first current profile; a plurality of power switches disposed between the battery receptacle and the electric motor, the plurality of power switches including a plurality of high-side switches and a plurality of low-side switches, the plurality of power switches being associated with a second current profile; a control unit configured to control a switching operation of the plurality of power switches to operate the electric motor; and a battery disconnect circuit including: a main solid-state switch disposed on a current path from the battery receptacle to the plurality of power switches, a shunt resistor disposed in series with the main solid-state switch between the battery receptacle and the plurality of power switches, and a switch controller separate from the control unit that is configured to monitor a current across the shunt resistor and deactivate the main solid-state switch to disconnect the supply of power from the battery pack if the current draw from the battery pack exceeds a current threshold for a given duration of time.

### DETAILED DESCRIPTION

The following description illustrates the claimed invention by way of example and not by way of limitation. The description clearly enables one skilled in the art to make and use the disclosure, describes several embodiments, adaptations, variations, alternatives, and uses of the disclosure, including what is presently believed to be the best mode of carrying out the claimed invention. Additionally, it is to be understood that the disclosure is not limited in its application to the details of construction and the arrangements of components set forth in the following description or illustrated in the drawings. The disclosure is capable of other embodiments and of being practiced or being carried out in various ways. Also, it is to be understood that the phraseology and terminology used herein is for the purpose of description and should not be regarded as limiting.

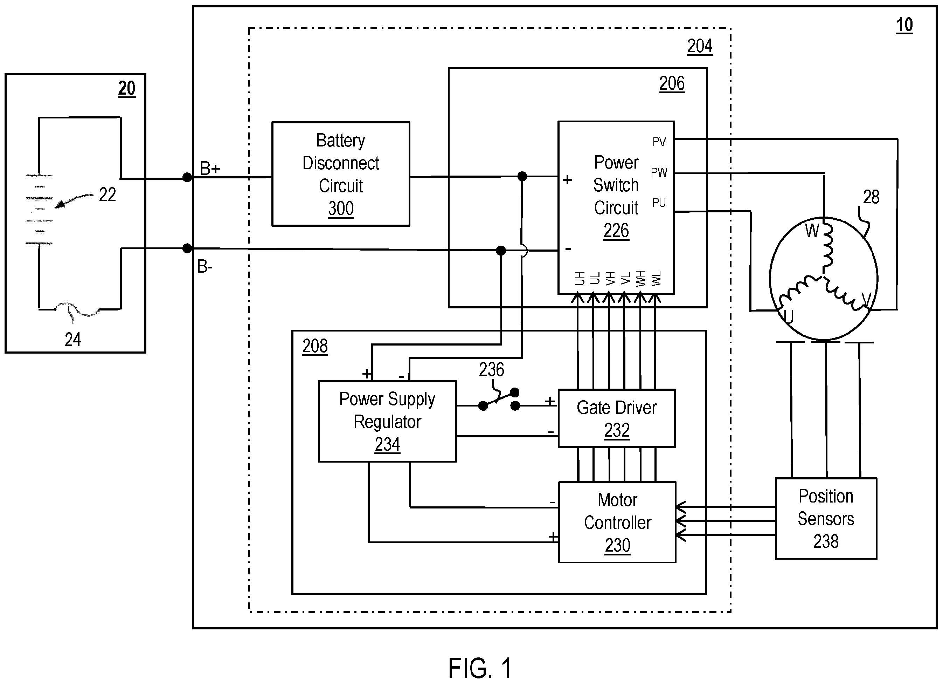

Referring to Fig. 1, a circuit block diagram of power tool 10 including a motor 28 and a motor control module 204 is depicted, according to an embodiment. In an embodiment, motor control module 204 includes a power unit 206 and a control unit 208. In Fig. 1, power tool 10 received DC power from a DC power source such as a battery pack 20 via B+ and B- terminals.

In an embodiment, power unit 206 may include a power switch circuit 226 coupled between the power source B+/B- terminals and motor windings to drive BLDC motor 28. In an embodiment, power switch circuit 226 may be a three-phase bridge driver circuit including six controllable semiconductor power devices (e.g. FETs, BJTs, IGBTs, etc.).

In an embodiment, control unit 208 may include a motor controller 230, a gate driver 232, a power supply regulator 234, and a contact switch 236. In an embodiment, motor controller 230 is a programmable device arranged to control a switching operation of the power devices in power switching circuit 226. In an embodiment, motor controller 230 receives rotor rotational position signals from a set of position sensors 238 provided in close proximity to the motor 28 rotor. In an embodiment, position sensors 238 may be Hall sensors. It should be noted, however, that other types of positional sensors may be alternatively utilized. It should also be noted that motor controller 230 may be configured to calculate or detect rotational positional information relating to the motor 28 rotor without any positional sensors (in what is known in the art as sensorless brushless motor control). motor controller 230 may also receive a variable-speed signal from variable-speed actuator or a speed-dial. Based on the rotor rotational position signals from the position sensors 238 and the variable-speed signal, motor controller 230 outputs drive signals UH, VH, WH, UL, VL, and WL through the gate driver 232, which provides a voltage level needed to drive the gates of the semiconductor switches within the power switch circuit 226 in order to control a PWM switching operation of the power switch circuit 226.

In an embodiment, power supply regulator 234 may include one or more voltage regulators to step down the power supply to a voltage level compatible for operating the motor controller 230 and/or the gate driver 232. In an embodiment, power supply regulator 234 may include a buck converter and/or a linear regulator to reduce the power voltage of battery pack 20 down to, for example, 15V for powering the gate driver 232, and down to, for example, 3.2V for powering the motor controller 230.

In an embodiment, contact switch 236 may be provided between the power supply regulator 234 and the gate driver 232. Contact switch 236 may be an ON/OFF switch coupled to the ON/OFF trigger or the variable-speed actuator to allow the user to begin operating the motor 28. Power switch 236 in this embodiment disables supply of power to the motor 28 by cutting power to the gate drivers 232. It is noted, however, that contact switch 236 may be provided at a different location, for example, within the power unit 206 between the battery pack 20 and the power switch circuit 226. It is further noted that in an embodiment, power tool 128 may be provided without a contact switch 236, and the motor controller 230 may be configured to activate the power devices in power switch circuit 226 when the ON/OFF trigger (or variable-speed actuator) is actuated by the user.

In an embodiment, battery pack 20 is provided with at least one string of cells 22, which includes a series of battery cells, for example, lithium or lithium-ion cells, connected in series. A fuse 24 is coupled in series with the string of cells 22. In an embodiment, two or more strings of cells 22 may be connected together in parallel, thus increasing the ampere-hour capacity of the battery pack. When two or more strings of cells 22 are provided, in an embodiment, two or more fuses 24 corresponding to the number of parallel strings of cells 22 may be provided. The fuse 24 has a current rating above which level the fuse opens and disconnects supply of current from the battery pack 20. In an embodiment, the fuse 24 may have a current-time curve (e.g., a |^2.t curve) that defines the current bounds of the fuse 24.

In an embodiment, a battery disconnect circuit 300 is provided on the current path of the battery pack 20, e.g., between the B+ terminal of the battery pack 20 and the power switch circuit 226. Battery disconnect circuit 300 is provided as a placement for a conventional fuse to ensure disconnection of the battery pack 20 from the motor 28 in the event that an electrical shortage or other system failure causes high current draw from the battery pack 20.

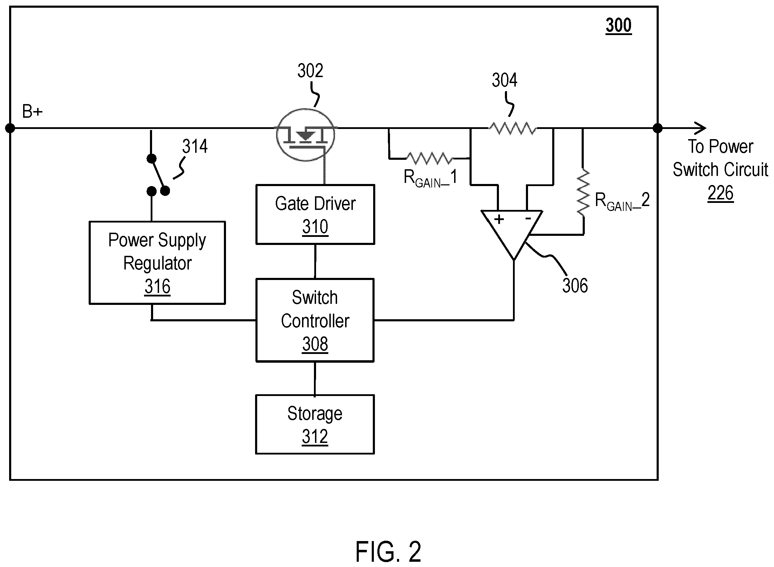

Fig. 2 depicts a circuit diagram of the battery disconnect circuit 300, according to an embodiment. In an embodiment, battery disconnect circuit 300 includes a main solid-state switch 302, for example, a MOSFET, provided on the current path between B+ and the power switch circuit 226. In an embodiment, the battery disconnect circuit 300 further includes a shunt resistor 304 provided in series with the main switch 302. The voltage drop across the shunt resistor 304 corresponds to the amount of current being drawn by the power switch circuit 226. An amplifier 306 is coupled to the two sides of the shunt resistor 304 as a differential amplifier. The output of the amplifier 306 is received by a switch controller 308. The amplifier 306 amplifies the voltage drop across the shunt resistor 304 by gains controlled via resistors R_{GAIN_1} AND R_{GAIN_2} to a level operable by the switch controller 308.

The switch controller 308, similarly to motor controller 230, is a programmable device, though, in an embodiment, the switch controller 308 has less processing speed than the motor controller 230. In an embodiment, the switch controller 308 is configured to receive the signal from the amplifier 306 and activates a drive signal via the gate driver 310 accordingly to turn the main witch 302 ON or OFF. In an embodiment, voltage drop across the shunt resistor 304 exceeds a reference threshold, the switch controller 308 determines that the current draw is larger than a reference current threshold and turns the main switch 302 OFF. This reference current threshold, as will be described later, is typically associated with current levels seen in the event of an electrical shortage or system failure within the power tool 10 that may lead to damage to power tool 10 components. In an embodiment, switch controller 308 activates the drive signal to maintain the main switch 302 ON as long as the current draw does not exceed the reference current threshold. If the current draw is larger than the reference current threshold, the switch controller 308 activates the drive signal to turn OFF the main switch 302.

Furthermore, in an embodiment, the switch controller 308 stores a value associated with the signal from the comparator 306 in storage 312, which may be a non-volatile memory unit. Accordingly, if current exceeds the reference current threshold and the value is stored in storage 312, the switch controller 308 will not allow the main switch 302 to close even if the battery pack 20 is removed and reattached to the power tool 10. This ensured that the system failure or electrical shortage within the power tool 10 that caused the high current will not be repeated and that the power tool 10 cannot be used until the tool is serviced and the switch controller 308 is reset by an authorized technician.

In an embodiment, switch controller 308 is in communication with motor controller 230. This communication allows the motor controller 230 to know the state of the battery disconnect circuit 300, i.e., if a "fuse event" takes place, and provide a secondary means to disable the main switch 302 of the battery disconnect circuit 300 for added redundancy. In an embodiment, upon detection of the current being larger than the reference current threshold, the switch controller 308, in addition to disabling the main switch 302 via the gate driver 310, sends a signal to the motor controller 230. The motor controller 230 sends a signal back to the switch controller 308 signifying that the main switch 302 is to be disabled. Additionally, and/or alternatively, the motor controller 230 sends a signal to the gate driver 310 to disable the main switch 302. In this manner, the motor controller 230 provides a secondary level of redundancy to ensure that the main switch 302 is disabled upon detection of a "fuse event."

In an embodiment, a power supply regulator 316 may be provided to supply power from the battery pack 10 to the switch controller 308. Further, in an embodiment, a contact switch 314 may be provided between the battery pack 10 and the power supply regulator 316. Contact switch 314 may be provided in addition to, or in place of, contact switch 236 described above. In an embodiment, contact switch 314 may be actuated via the power tool trigger switch.

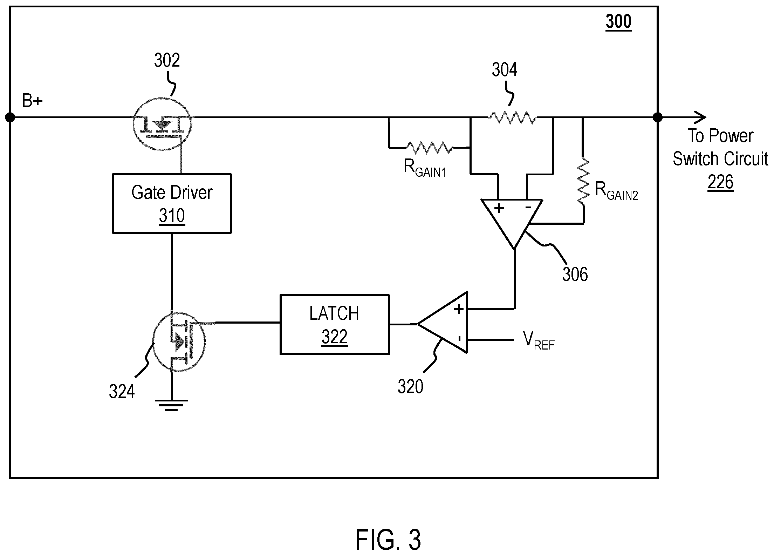

Fig. 3 depicts a circuit diagram of the battery disconnect circuit 300, according to an alternative embodiment. In this embodiment, the battery disconnect circuit 300 includes, instead of a switch controller 308, a comparator 320, a latch 322, and a gate switch 324. Comparator 320 compares the output of the amplifier 306, which signifies the delta of the voltage across the resistor 304, with a reference voltage V_{REF}. If the output voltage of the amplifier 306 exceeds the reference voltage V_{REF} at any time, latch 322 drives the gate of gate switch 324, which causes the gate driver 310 to shut down the main switch 302.

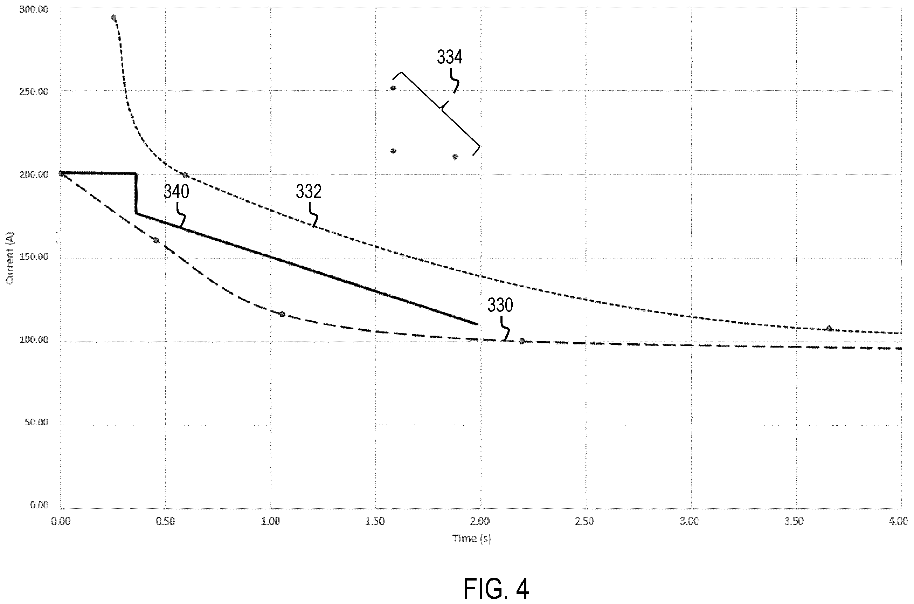

Figs. 4-6 depict graphs of current-time profiles associated with the battery disconnect circuit in comparison to profiles associated with the battery pack and the power tool, according to an embodiment. In these graphs, plot 330 represents the current-time rating of the motor control module 204. A current level above this plot for a given duration of time is likely to cause damage to the control and power components of the motor control module 204. Similarly, plot 332 represents the current-time rating of battery packs 10. A current level above this plot for a given duration of time is likely to cause damage to the battery pack 10 components. In an embodiment, plot 332 correspond to the current-time rating of the fuse 24 within the battery pack 20. Dots 334 represent sample applied currents for corresponding durations of time performed for UL testing.

In an embodiment, plots 340, 342 and 344 represent the current-time rating of the battery disconnect circuit 300, according to three exemplary embodiments. In particular, the reference current threshold discussed above is set as a function of time according to plots 340, 342 and 344. Each plot 340, 342 and 344 includes at least a significant portion that is located between plots 330 and 332. This ensures that high current levels that may occur as a result of electrical shortage or damage within the motor control module 204 (i.e., current levels exceeding the rated current of the motor control module 204) neither damage the battery pack 20 nor activate the fuse within the battery pack 20.

In an embodiment, plot 340, as shown in Fig. 4, includes at least a linear portion (e.g., between 0.4 to 2 seconds) located between plots 330 and 332. The plot 340 further includes a flat portion at which the current is clamped at 200 amps for short durations of time less than 0.4 seconds.

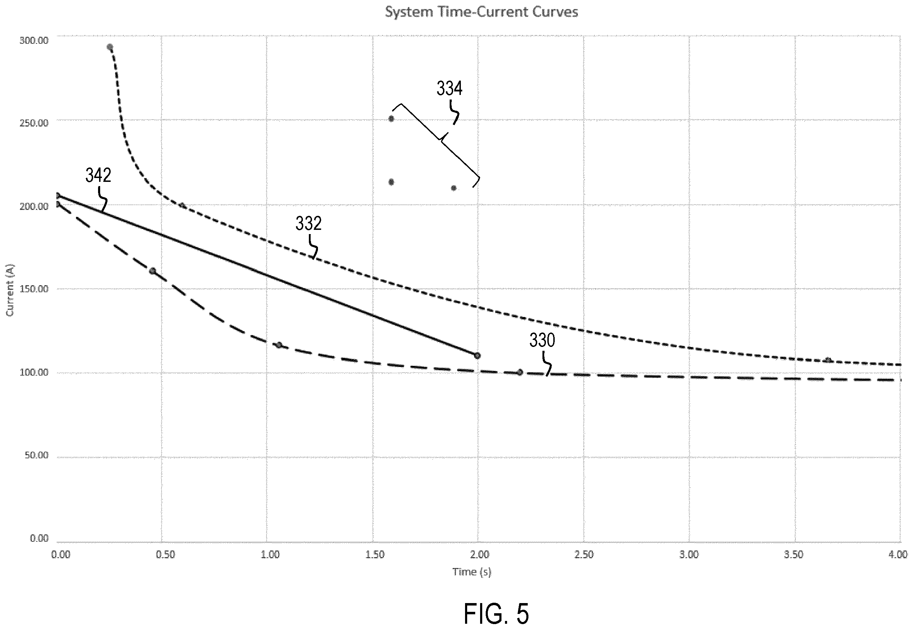

In an embodiment, plot 342, as shown in Fig. 5, is a linear plot fully contained between plots 330 and 332. In an embodiment, plots 340 and 342 may include linear portions, non-linear (curved) portions, or combinations thereof.

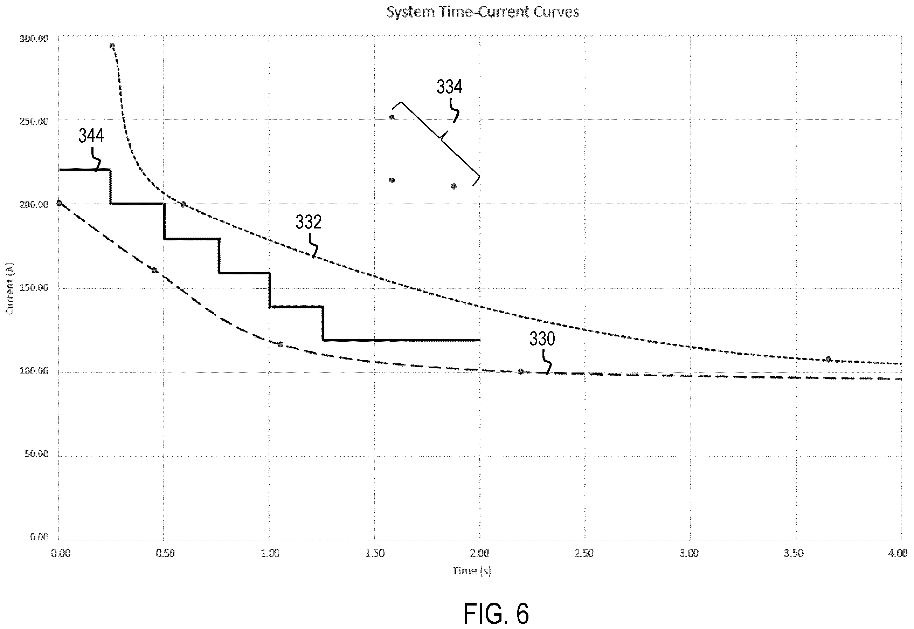

In an embodiment, plot 344, as shown in Fig. 6, is a stepped plot, where discrete current thresholds are set corresponding to discrete time intervals (e.g., every 0.5 seconds). This may be done according to a look-up table.

In an embodiment, main controller 230 is configured to enforce a separate current control scheme from the battery disconnect circuit 300. In this embodiment, the current limit enforced by the main controller 230 is lower than the current limit enforced by the battery disconnect circuit 300 as well as the current rating of the motor control module 204. Additionally, and/or alternatively, the current-time profile enforced by the main controller 230 is positioned lower than the current-time profile enforced by the battery disconnect circuit 300 as well as the current-time profile corresponding to the current rating of the motor control module 204.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

## Claims

1. A power tool comprising:
a housing;
a brushless direct-current (BLDC) electric motor (28) disposed inside the housing;
a battery pack (20);
a battery receptacle configured to receive the battery pack (20), the battery pack including a plurality of battery cells and a fuse being associated with a first current profile;
a plurality of power switches disposed between the battery receptacle and the electric motor, the plurality of power switches including a plurality of high-side switches and a plurality of low-side switches, the plurality of power switches being associated with a second current profile;
a control unit (208) configured to control a switching operation of the plurality of power switches to operate the electric motor; and
a battery disconnect circuit (300) disposed between the battery receptacle and the plurality of power switches to disconnect the supply of power from the battery pack if the current draw from the battery pack exceeds a current threshold for a given duration of time, wherein the current threshold is smaller than a first current level associated the first current profile for the given duration of time but larger than a second current level associated with the second current profile for the given duration of time.

2. The power tool of claim 1, wherein the battery disconnect circuit comprises a main solid-state switch (302) disposed on a current path from the battery receptacle to the plurality of power switches, and a shunt resistor (304) disposed in series with the main solid-state switch.

3. The power tool of claim 2, wherein the battery disconnect circuit further comprises a switch controller (308) separate from the control unit that is configured to monitor a current across the shunt resistor and drive the main solid-state switch accordingly.

4. The power tool of claim 3, wherein the switch controller is configured to deactivate the switch controller if the current across the shunt resistor exceeds the current threshold for the given duration of time.

5. The power tool of claim 4, wherein the switch controller is configured to store a value associated with the current across the shunt resistor in a non-volatile memory unit (312) and continue to deactivate the power switch even if the battery pack is decoupled and recoupled to the battery receptacle.

6. The power tool of claim 2, wherein the battery disconnect circuit further comprises a comparator (306) configured to compare a voltage drop across the shunt resistor to a reference voltage value, and a latch (322) configured to drive the main solid-state switch according to an output of the comparator.

7. The power tool of any preceding claim, wherein the current threshold is determined based on a current-time profile that at no point of time exceeds the first current profile or falls below the second current profile.

8. The power tool of any preceding claim, wherein the current-time profile includes a linear portion.

9. The power tool of claim 1, wherein the battery disconnect circuit comprises: a main solid-state switch disposed on a current path from the battery receptacle to the plurality of power switches, a shunt resistor disposed in series with the main solid-state switch between the battery receptacle and the plurality of power switches, and a switch controller separate from the control unit that is configured to monitor a current across the shunt resistor and deactivate the main solid-state switch to disconnect the supply of power from the battery pack if the current draw from the battery pack exceeds the current threshold for the given duration of time.

10. The power tool of claim 9, wherein the current threshold is smaller than a first current level associated the first current profile for the given duration of time but larger than a second current level associated with the second current profile for the given duration of time.

11. The power tool of claim 9 or 10, wherein the switch controller is configured to store a value associated with the current across the shunt resistor in a non-volatile memory unit (312) and continue to deactivate the power switch even if the battery pack is decoupled and recoupled to the battery receptacle.

12. The power tool of any of claims 9 to 11, wherein the current threshold is determined based on a current-time profile that at no point of time exceeds the first current profile or falls below the second current profile.

13. The power tool of claim 12, wherein the current-time profile includes a linear portion.

14. The power tool of claim 12, wherein the current-time profile includes a stepped profile.

15. The power tool of claim 12, wherein the current-time profile includes a flat portion.

## Patentansprüche

1. Elektrowerkzeug, umfassend:
ein Gehäuse;
einen bürstenlosen Gleichstromelektromotor (BLDC) (28), welcher innerhalb des Gehäuses angeordnet ist;
ein Batteriepack (20);
eine Batterieaufnahme, welche dazu konfiguriert ist, das Batteriepack (20) aufzunehmen, wobei das Batteriepack eine Vielzahl von Batteriezellen und eine Sicherung beinhaltet, welche mit einem ersten Stromprofil verknüpft ist;
eine Vielzahl von Netzschaltern, welche zwischen der Batterieaufnahme und dem Elektromotor angeordnet sind, wobei die Vielzahl von Netzschaltern eine Vielzahl von hochseitigen Schaltern und eine Vielzahl von niederseitigen Schaltern beinhaltet, wobei die Vielzahl von Netzschaltern mit einem zweiten Stromprofil verknüpft ist;
eine Steuereinheit (208), welche dazu konfiguriert ist, einen Schaltvorgang der Vielzahl von Netzschaltern zum Betreiben des Elektromotors zu steuern; und
eine Batterietrennschaltung (300), welche zwischen der Batterieaufnahme und der Vielzahl von Netzschaltern angeordnet ist, um die Stromzufuhr von dem Batteriepack zu trennen, wenn die Stromaufnahme aus dem Batteriepack einen Stromschwellenwert für eine gegebene Zeitdauer überschreitet, wobei der Stromschwellenwert kleiner als ein erster Strompegel ist, welcher mit dem ersten Stromprofil für die gegebene Zeitdauer verknüpft ist, jedoch größer als ein zweiter Strompegel, welcher mit dem zweiten Stromprofil für die gegebene Zeitdauer verknüpft ist.

2. Elektrowerkzeug nach Anspruch 1, wobei die Batterietrennschaltung einen Haupthalbleiterschalter (302), welcher auf einem Strompfad von der Batterieaufnahme zu der Vielzahl von Netzschaltern angeordnet ist, und einen Nebenschlusswiderstand (304) umfasst, welcher in Reihe mit dem Haupthalbleiterschalter angeordnet ist.

3. Elektrowerkzeug nach Anspruch 2, wobei die Batterietrennschaltung weiter eine von der Steuereinheit getrennte Schaltersteuereinheit (308) umfasst, welche dazu konfiguriert ist, einen Strom über den Nebenschlusswiderstand zu überwachen und den Haupthalbleiterschalter entsprechend anzusteuern.

4. Elektrowerkzeug nach Anspruch 3, wobei die Schaltersteuereinheit dazu konfiguriert ist, die Schaltersteuereinheit zu deaktivieren, wenn der Strom durch den Nebenschlusswiderstand den Stromschwellenwert für die vorgegebene Zeitdauer überschreitet.

5. Elektrowerkzeug nach Anspruch 4, wobei die Schaltersteuereinheit dazu konfiguriert ist, einen mit dem Strom über den Nebenschlusswiderstand verknüpften Wert in einer nichtflüchtigen Speichereinheit (312) zu speichern und den Netzschalter auch dann weiterhin zu deaktivieren, wenn das Batteriepack von der Batterieaufnahme abgekoppelt und wieder angekoppelt wird.

6. Elektrowerkzeug nach Anspruch 2, wobei die Batterietrennschaltung weiter einen Komparator (306), welcher dazu konfiguriert ist, einen Spannungsabfall über dem Nebenschlusswiderstand mit einem Referenzspannungswert zu vergleichen, sowie ein Schaltschloss (322) umfasst, welches dazu konfiguriert ist, den Haupthalbleiterschalter entsprechend einer Ausgabe des Komparators anzusteuern.

7. Elektrowerkzeug nach einem vorstehenden Anspruch, wobei der Stromschwellenwert basierend auf einem Strom-Zeit-Profil bestimmt wird, welches zu keinem Zeitpunkt das erste Stromprofil überschreitet oder unter das zweite Stromprofil fällt.

8. Elektrowerkzeug nach einem vorstehenden Anspruch, wobei das Strom-Zeit-Profil einen linearen Abschnitt beinhaltet.

9. Elektrowerkzeug nach Anspruch 1, wobei die Batterietrennschaltung umfasst: einen Haupthalbleiterschalter, welcher auf einem Strompfad von der Batterieaufnahme zu der Vielzahl von Netzschaltern angeordnet ist, einen Nebenschlusswiderstand, welcher in Reihe mit dem Haupthalbleiterschalter zwischen der Batterieaufnahme und der Vielzahl von Netzschaltern angeordnet ist, und eine von der Steuereinheit getrennte Schaltersteuereinheit, welche dazu konfiguriert ist, einen Strom durch den Nebenschlusswiderstand zu überwachen und den Haupthalbleiterschalter zu deaktivieren, um die Stromzufuhr von dem Batteriepack zu trennen, wenn die Stromaufnahme aus dem Batteriepack den Stromschwellenwert für die gegebene Zeitdauer überschreitet.

10. Elektrowerkzeug nach Anspruch 9, wobei der Stromschwellenwert kleiner als ein erster Strompegel ist, welcher mit dem ersten Stromprofil für die gegebene Zeitdauer verknüpft ist, jedoch größer als ein zweiter Strompegel, welcher mit dem zweiten Stromprofil für die gegebene Zeitdauer verknüpft ist.

11. Elektrowerkzeug nach Anspruch 9 oder 10, wobei die Schaltersteuereinheit dazu konfiguriert ist, einen mit dem Strom über den Nebenschlusswiderstand verknüpften Wert in einer nichtflüchtigen Speichereinheit (312) zu speichern und den Netzschalter auch dann weiterhin zu deaktivieren, wenn das Batteriepack von der Batterieaufnahme abgekoppelt und wieder angekoppelt wird.

12. Elektrowerkzeug nach einem der Ansprüche 9 bis 11, wobei der Stromschwellenwert basierend auf einem Strom-Zeit-Profil bestimmt wird, welches zu keinem Zeitpunkt das erste Stromprofil überschreitet oder unter das zweite Stromprofil fällt.

13. Elektrowerkzeug nach Anspruch 12, wobei das Strom-Zeit-Profil einen linearen Abschnitt beinhaltet.

14. Elektrowerkzeug nach Anspruch 12, wobei das Strom-Zeit-Profil ein Stufenprofil beinhaltet.

15. Elektrowerkzeug nach Anspruch 12, wobei das Strom-Zeit-Profil einen flachen Abschnitt beinhaltet.

## Revendications

1. Outil électrique comprenant :
un boîtier ;
un moteur électrique à courant continu sans balais (BLDC) (28) disposé à l'intérieur du boîtier ;
un bloc-batterie (20) ;
un réceptacle de batterie configuré pour recevoir le bloc-batterie (20), le bloc-batterie incluant une pluralité de cellules de batterie et un fusible étant associé à un premier profil de courant ;
une pluralité de commutateurs de puissance disposés entre le réceptacle de batterie et le moteur électrique, la pluralité de commutateurs de puissance incluant une pluralité de commutateurs côté haut et une pluralité de commutateurs côté bas, la pluralité de commutateurs de puissance étant associée à un second profil de courant ;
une unité de commande (208) configurée pour commander une opération de commutation de la pluralité de commutateurs de puissance pour faire fonctionner le moteur électrique ; et
un circuit de déconnexion de batterie (300) disposé entre le réceptacle de batterie et la pluralité de commutateurs de puissance pour déconnecter l'alimentation électrique du bloc-batterie si le courant tiré du bloc-batterie dépasse un seuil de courant pendant une durée donnée, dans lequel le seuil de courant est inférieur à un premier niveau de courant associé au premier profil de courant pendant la durée donnée mais supérieur à un second niveau de courant associé au second profil de courant pendant la durée donnée.

2. Outil électrique selon la revendication 1, dans lequel le circuit de déconnexion de batterie comprend un commutateur à semi-conducteurs principal (302) disposé sur un trajet de courant allant du réceptacle de batterie à la pluralité de commutateurs de puissance, et une résistance shunt (304) disposée en série avec le commutateur à semi-conducteurs principal.

3. Outil électrique selon la revendication 2, dans lequel le circuit de déconnexion de batterie comprend en outre un dispositif de commande de commutateur (308) séparé de l'unité de commande qui est configuré pour surveiller un courant à travers la résistance shunt et piloter le commutateur à semi-conducteurs principal en conséquence.

4. Outil électrique selon la revendication 3, dans lequel le dispositif de commande de commutateur est configuré pour désactiver le dispositif de commande de commutateur si le courant à travers la résistance shunt dépasse le seuil de courant pendant la durée donnée.

5. Outil électrique selon la revendication 4, dans lequel le dispositif de commande de commutateur est configuré pour stocker une valeur associée au courant à travers la résistance shunt dans une unité de mémoire non volatile (312) et continuer à désactiver le commutateur de puissance même si le bloc-batterie est désolidarisé et couplé à nouveau au réceptacle de batterie.

6. Outil électrique selon la revendication 2, dans lequel le circuit de déconnexion de batterie comprend en outre un comparateur (306) configuré pour comparer une chute de tension à travers la résistance shunt à une valeur de tension de référence, et un verrou (322) configuré pour piloter le commutateur à semi-conducteurs principal selon une sortie du comparateur.

7. Outil électrique selon une quelconque revendication précédente, dans lequel le seuil de courant est déterminé sur la base d'un profil courant-temps qui, à aucun moment, ne dépasse le premier profil de courant ou ne tombe en dessous du second profil de courant.

8. Outil électrique selon une quelconque revendication précédente, dans lequel le profil courant-temps inclut une partie linéaire.

9. Outil électrique selon la revendication 1, dans lequel le circuit de déconnexion de batterie comprend : un commutateur à semi-conducteurs principal disposé sur un trajet de courant allant du réceptacle de batterie à la pluralité de commutateurs de puissance, une résistance shunt disposée en série avec le commutateur à semi-conducteurs principal entre le réceptacle de batterie et la pluralité de commutateurs de puissance, et un dispositif de commande de commutateur séparé de l'unité de commande qui est configuré pour surveiller un courant à travers la résistance shunt et désactiver le commutateur à semi-conducteurs principal pour déconnecter l'alimentation électrique du bloc-batterie si le courant tiré du bloc-batterie dépasse le seuil de courant pendant la durée donnée.

10. Outil électrique selon la revendication 9, dans lequel le seuil de courant est inférieur à un premier niveau de courant associé au premier profil de courant pendant la durée donnée mais supérieur à un second niveau de courant associé au second profil de courant pendant la durée donnée.

11. Outil électrique selon la revendication 9 ou 10, dans lequel le dispositif de commande de commutateur est configuré pour stocker une valeur associée au courant à travers la résistance shunt dans une unité de mémoire non volatile (312) et continuer à désactiver le commutateur de puissance même si le bloc-batterie est désolidarisé et couplé à nouveau au réceptacle de batterie.

12. Outil électrique selon l'une quelconque des revendications 9 à 11, dans lequel le seuil de courant est déterminé sur la base d'un profil courant-temps qui, à aucun moment, ne dépasse le premier profil de courant ou ne tombe en dessous du second profil de courant.

13. Outil électrique selon la revendication 12, dans lequel le profil courant-temps inclut une partie linéaire.

14. Outil électrique selon la revendication 12, dans lequel le profil courant-temps inclut un profil étagé.

15. Outil électrique selon la revendication 12, dans lequel le profil courant-temps inclut une partie plate.
